Europäisches Patentamt

European Patent Office

Office européen des brevets

(19)

(11) **EP 0 995 279 B1**

(12) **EUROPEAN PATENT SPECIFICATION**

(45) Date of publication and mention
of the grant of the patent:
**25.09.2002 Bulletin 2002/39**

(51) Int Cl.⁷: **H04B 7/24**, H04H 1/00,
H04N 7/20, H04N 7/15,
H04N 7/173

(21) Application number: **98932390.2**

(22) Date of filing: **07.07.1998**

(86) International application number:
**PCT/GB98/01996**

(87) International publication number:
**WO 99/003216 (21.01.1999 Gazette 1999/03)**

(54) **REBROADCASTING COMMUNICATION SYSTEM**

WIEDERHOLUNG-RUNDFUNKÜBERTRAGUNGSSYSTEM

SYSTEME DE COMMUNICATION DE REEMISSION

(84) Designated Contracting States:
**AT BE CH CY DE DK ES FI FR GB GR IE IT LI LU
MC NL PT SE**

(30) Priority: **07.07.1997 GB 9714295**

(43) Date of publication of application:
**26.04.2000 Bulletin 2000/17**

(73) Proprietor: **SCIENTIFIC GENERICS LIMITED
Harston, Cambridgeshire CB2 5NH (GB)**

(72) Inventors:
 • **BARCLAY, Michael, John
 Cambridgeshire CB2 5NH (GB)**
 • **VASILOPOULOS, Nicolas
 Cambridgeshire CB2 5NH (GB)**

(74) Representative:
**Beresford, Keith Denis Lewis et al
BERESFORD & Co.
2-5 Warwick Court,
High Holborn
London WC1R 5DH (GB)**

(56) References cited:
**GB-A- 2 291 564**       **US-A- 4 041 389**
**US-A- 4 367 485**       **US-A- 5 612 948**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a method of and apparatus for communicating signals between a number of users. The invention has particular although not exclusive relevance to the communication of broadband data using broadcast line-of-sight communication techniques.

There is an increasing demand for providing a broadband communication link into homes and businesses, for the provision of services such as video on demand, high speed internet, video telephony, on-line multiplayer gaming etc. At present the communications link into home and business is predominantly twisted pair copper telephone lines which may be used carry analogue telephone and modem signals, and ISDN. The bandwidth which is provided by such technology is, however, limited and may be described as narrowband.

Some technologies have been proposed which will provide a broadband communication link into homes and businesses. Some of these employ the same twisted pair copper or coaxial cable used for telephone distribution. It has also been suggested to run fibre optic cable into homes and businesses. However, this latter solution is not practical due to the cost of installing the fibre optic cable.

It has also been proposed to provide this broadband communications link by broadcasting the data using microwave frequencies and above. However, the problem of using such frequencies is that their propagation is severally attenuated by oxygen and rain absorption and the propagation is strictly line-of-sight.

The attenuation characteristics of such high frequency signals means that transmission distances are relatively short. Using practical and safe power levels, a maximum distance of the order of 5 km is achieved in real deployment. The line-of-sight characteristics mean that the communication link between the transmitter and receiver needs to be over a path without any obstructions. Buildings form complete obstructions and even trees with dense foliage can constitute a fairly significant obstruction. Some over-the-horizon propagation has been shown to be possible, and it is also possible to bend the signal by bouncing it off fairly small reflective surfaces. However, for levels of reliability comparable to those required in a telecommunications network and offered by twisted pair copper or optical fibre, a practical installation using such high-frequency signals will preferably need to ensure that a clear line-of-sight path is available between the transmitter and the receiver.

In some implementations, a central base station will be provided which broadcasts the microwave data signals to a number of users located within the broadcast region. The problem that the present invention addresses is that in this case, not all users may be able to "see and hear" the central base station.

US 5612948 describes a cellular communication network in which a portion of subscriber nodes act as repeaters for a base node. The receiver stations which receive communications from the repeaters receive the data during a predetermined time slot which is controlled by the base station.

According to one aspect, the present invention provides a communication system comprising: a broadcast station for broadcasting information-bearing signals in the microwave frequency band or above; a plurality of repeater stations which are located so as to be in direct line-of-sight communication with said broadcast station and each comprising: i) a receive antenna for receiving said information-bearing signals broadcast by said broadcast station; ii) a repeater unit which is arranged to amplify the information-bearing signals received by said receive antenna and to output the amplified information-bearing signals; and iii) a transmit antenna which is arranged to broadcast the amplified information-bearing signals output by said repeater unit; wherein at least two of said repeater stations are arranged to broadcast the amplified information-bearing signals into a common area; and at least one receiver station which is located within said common area and which is not in line-of-sight communication with said broadcast station, the or each receive station comprising: i) a receive antenna arranged to receive the amplified information-bearing signals broadcast from said at least two repeater stations; and ii) means for processing the received signals to recover the information transmitted by said broadcast station.

The communication system described above can provide a broadband communication link into homes and businesses. Since some users may receive the same signal from a plurality of different intermediate user stations, the base station preferably modulates the data onto a plurality of separate carrier frequencies in order to reduce the transmitted symbol rate which reduces the problems associated with the reception of multipath signals. This facilitates the user stations which are not in direct communication with the base station to be able to recover the transmitted signals from the received multipath signals without equalisation or compensation. Preferably, the carrier frequencies which are used are spaced apart by an integer number of the symbol rate of the transmitted data, since this reduces inter-symbol interference.

By deliberately generating multipath signals, the system becomes more robust to changes in the physical channel and by using orthogonal frequency devision multiplexing techniques, the problems caused by such multipath signals can be mitigated.

The communication system can operate to provide broadband services such as video on demand, high speed internet access and like into homes and businesses.

Exemplary embodiments of the present invention will now be described with reference to the accompanying drawings in which:

Figure 1 is a schematic overview of a video distribution system for providing video on demand to a plurality of users;

Figure 2 is a block diagram illustrating the communication links set up between a base station and a plurality of user stations which form part of the video distribution system shown in Figure 1;

Figure 3 is a block diagram illustrating the components of the base station shown in Figure 2;

Figure 4 shows a typical configuration of a pair of roof mounted microwave antennae which form part of one of the user stations shown in Figure 2;

Figure 5 is a schematic block diagram illustrating the components of one of the user stations shown in Figure 2;

Figure 6 is a schematic block diagram showing the components of a repeater unit forming part of the user station shown in Figure 5;

Figure 7 is a signal diagram illustrating the effect of multipath signals arriving at a user station;

Figure 8 is a signal diagram illustrating the form of a data stream to be transmitted to a user station and the form of an in-phase and a quadrature phase symbol stream derived from the illustrated data stream;

Figure 9 is a frequency plot illustrating a way in which the video distribution system shown in Figure 1 splits the available bandwidth into a plurality of frequency channels;

Figure 10 is a frequency plot illustrating the carrier frequencies used within one of the frequency channels illustrated in Figure 9; and

Figure 11 illustrates a schematic overview of a multipoint-to-point monitoring system in which a number of monitoring stations communicate with a central monitoring station.

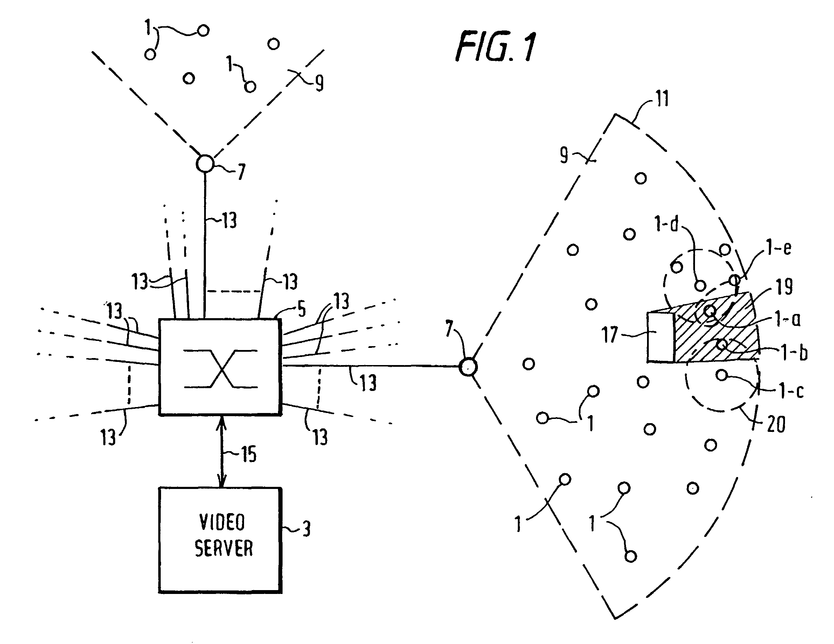

Figure 1 illustrates a schematic overview of a video on demand distribution system for distributing digital video signals to a plurality of user stations, some of which are referenced 1. The video distribution system comprises a central video server 3, a switching circuit 5 and a plurality of base stations 7. As illustrated in Figure 1, each user station 1 is serviced by a single base station 7 with which the user station communicates either directly or indirectly via one or more other user stations. In this embodiment the communication link between two user stations or between a user station and the base station is in the microwave frequency band between 2 GHz and 70 GHz, and is therefore predominantly line-of-sight only. In this embodiment, each base station 7 comprises a directional antenna (not shown) which is operable to broadcast signals into and receive signals from user stations located within a predetermined geographical area or cell. This geographical area or cell is illustrated in Figure 1 by the sector shaped area 9 enclosed by the broken line 11. In this embodiment the power of the base station transmitter is such that it can directly communicate with user stations that are up to 3 km away from the base station 7.
In operation, in response to a request for a particular video received from a user station 1, the base station 7 which services that user station 1 passes the request to the switching circuit 5 via a fibre optic link 13. The switching circuit 5 then routes the request to the video server 3 via the fibre optic link 15. Upon receipt of the user request, the video server 3 retrieves the appropriate video data from a large capacity storage device (not shown) and passes the retrieved data back to the corresponding base station 7 via the fibre optic link 15, the switching circuit 5 and the fibre optic link 13. The base station 7 then broadcasts the video data into the cell 9 for reception by the user station 1. Since the video data signals are broadcast into the whole cell 9, and can thus be received by all user stations in the cell, the broadcast data is encoded so that only the user who requested the video can decode it and retrieve the video picture.
In this embodiment, since the communication link between the base station and the user stations is line-of-sight, some user stations will not be able to "see and hear" the base station because the path between them and the base station 7 is blocked. This is illustrated in Figure 1 by the block 17 which represents a building which is located between the base station 7 and user stations 1-a and 1-b. As illustrated by the hatched area 19, the building 17 casts a shadow in the area 9 in which direct line-of-sight communications with the base station 7 cannot be achieved.
In this embodiment in order to ensure that each user station 1 can receive a signal from and can transmit a signal to the base station 7, each of the user stations 1 are operable to re-broadcast any signals which they receive for reception by other user stations in their vicinity. In this embodiment, the broadcasting power of each user station for re-broadcasting signals received from the base station 7 is limited in order to preserve the power consumed at each user station. In this embodiment, the user stations comprise a solar cell (not shown) and a back-up battery (not shown) for providing power to the broadcast antenna. As illustrated in Figure 1 by the dashed circle 20, user station 1-c broadcasts all data which it receives from the base station 7 in all directions. As shown in Figure 1, user station 1-b is located within the dashed circle 20 and can therefore receive signals from and transmit signals to the base station 7 via user station 1-c. Similarly, user station 1-a is located within the broadcast range of user stations 1-d and 1-e and can therefore receive signals from and transmit signals to the base station 7 via user stations 1-d and 1-e. It should be noted that, in this embodiment, since user station 1-e is located near the boundary of the cell 9, it uses a directional antenna for re-broadcasting the data which it receives from the base station so that it does not broadcast data outside the cell 9. This allows adjacent cells which are serviced by different base stations 7 to use the same transmitting frequencies.

However, since user station 1-a can receive signals from and transmit signals to the base station 7 via two different user stations, the communication link between the base station and user station 1-a is more robust since if the communication link between user station 1-a and user station 1-d or 1-e becomes temporarily blocked, then user station 1-a can still communicate with the base station via the other user station. In order to provide maximum robustness, each of the user stations are arranged to receive the re-broadcast signals from as many other user stations as is practical given the geographical layout of the user stations in the cell 9.

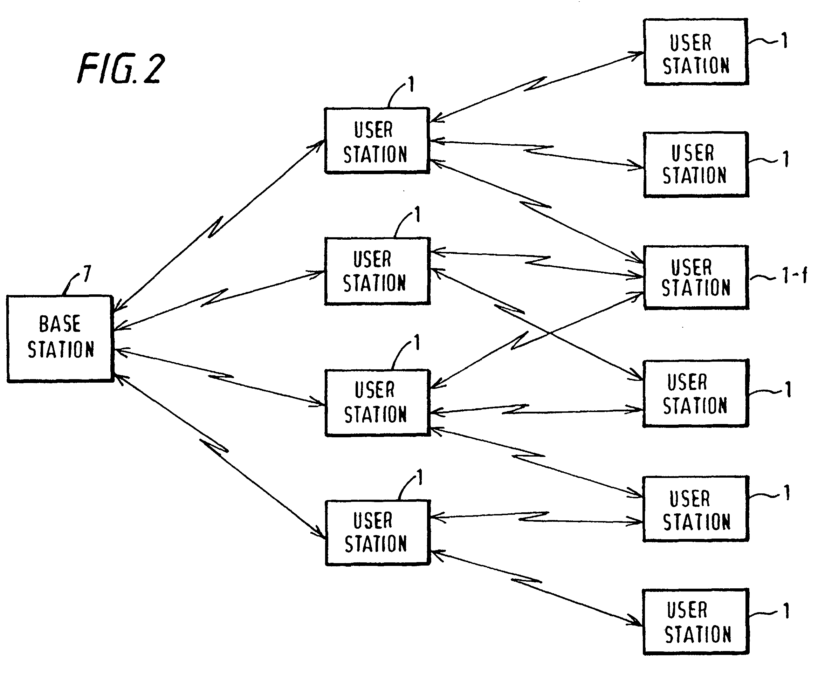

Figure 2 is a schematic block diagram illustrating the communication links formed between the base station 7 and the user stations 1. As shown, some of the user stations 1 receive data directly from and transmit data directly to the base station 7, whilst other user stations receive data from and transmit data to the base station 7 via other user stations. As shown, some of the latter type of user stations, such as user station 1-f, receive signals from a number of different intermediate user stations. In this embodiment, in order to avoid interference between the signals transmitted from the base station for reception by the user stations and the signals transmitted by the user stations for reception by the base station, different carrier frequencies are used.

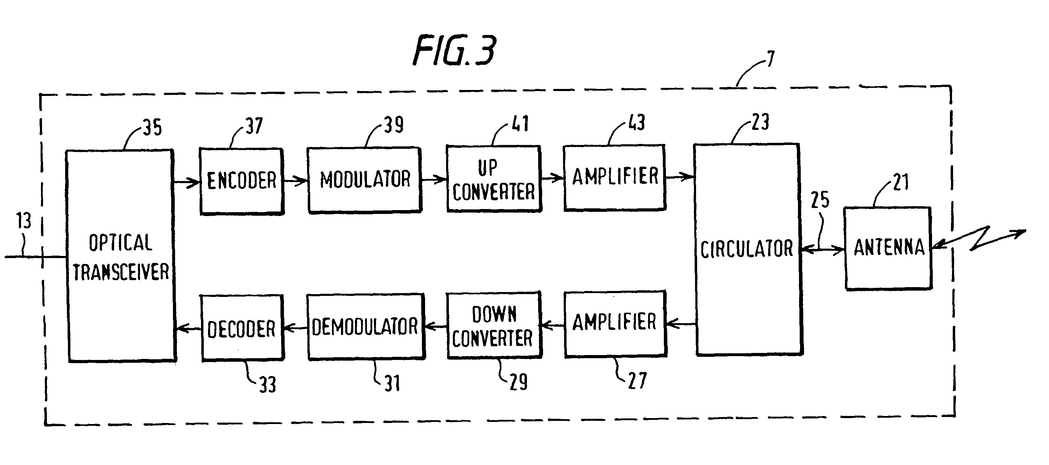

Figure 3 shows in more detail the components of the base station 7. As shown, base station 7 comprises an antenna 21 which is operable to transmit data to and receive data from user stations located within cell 9. Upon receipt of a request from a user station 1, the received microwave signal is passed to a circulator 23 via a microwave waveguide 25. The circulator 23 passes the received microwave signal to a microwave amplifier 27 which amplifies the received microwave signal and then passes it to a down-converter 29 for down-conversion from the microwave frequency band. The down-converted signal is then demodulated by a demodulator 31 and then passed to a decoder 33 where the user request is decoded. The decoded request is then passed to an optical transceiver 35 which transmits a corresponding optical signal to the switching circuit 5 for onward transmission to the video server 3.

Upon receipt of the user request, the video server 3 retrieves the necessary digital video data and passes this to the switching circuit 5 for transmission back to the base station 7 via the optical fibre 13. The optical transceiver 35 receives the optical digital video data from the optical fibre 13 and converts it into a corresponding electrical data signal which is passed to an encoder 37 where the data is encoded. The encoded data is then passed to a modulator 39 where it is modulated and then passed to an up-converter where the modulated data is up-converted to a microwave frequency. The microwave data signals are then amplified by amplifier 43 and then fed, via circulator 23 and waveguide 25, to the antenna 21 where the data is broadcast into the cell 9. In the remaining description, the data transmitted from the user stations to the base station will be referred to as up-link data and data transmitted from the base station to the user stations will be referred to as down-link data.

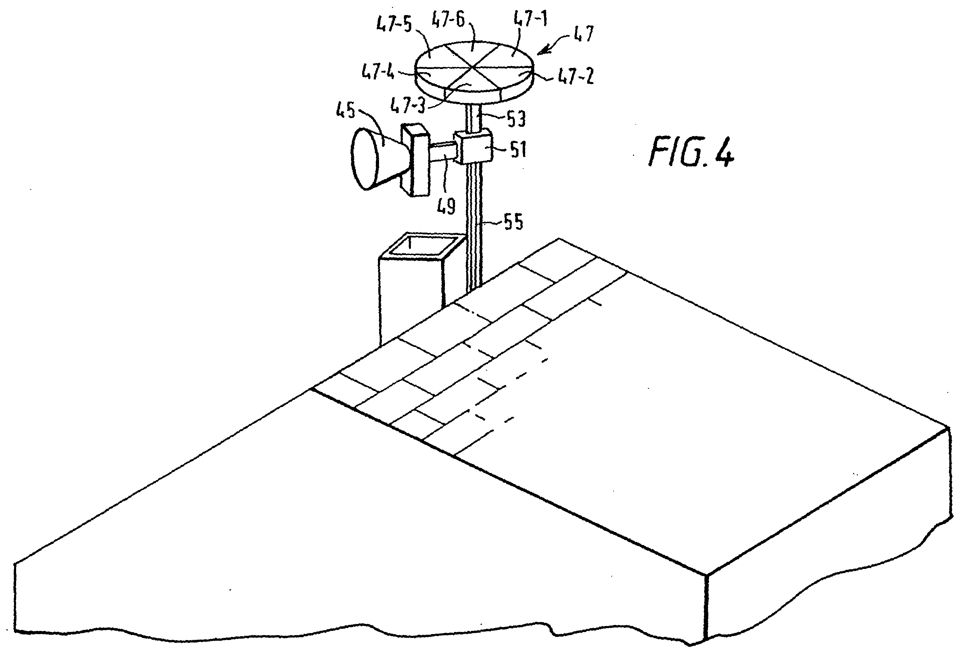

As mentioned above, in this embodiment, the video distribution system is for providing video on demand into the homes of a number of different users. In order to try to maintain a line of sight link between the user stations 1 and the base station 7, in this embodiment, the transmit and receive antenna of each user station are mounted on the roof of the corresponding user's home. Figure 4 shows a typical configuration of the roof mounted receive and transmit antennae for a user station. As shown, the illustrated user station has two microwave antennae 45 and 47. Microwave antenna 45 is for receiving down-link data and for transmitting up-link data and microwave antenna 47 is for transmitting down-link data and for receiving up-link data.

Microwave antenna 45 is directional in nature and has, in this embodiment, a beamwidth of approximately 30° within which it can receive microwave signals and into which it can broadcast microwave signals. The directional antenna 45 is for receiving signals from or for transmitting signals to either the base station 7 or the intermediate user station via which it communicates with the base station 7. Therefore, in this embodiment, in some cases the directional antenna 45 will have to transmit signals over a range of up to 3 km. For the user stations which communicate with the base station 7 via intermediate user stations, the power of the signal transmitted from the directional antenna 45 will have to be such that it can be received by the intermediate user station. The other antenna 47 is omnidirectional, i.e. it is arranged to be able to receive microwave signals and to transmit microwave signals through 360°. The broadcast power of the omnidirectional antenna 47 can be varied but, in this embodiment, will typically be such that user stations within a range of approximately 500 m can receive the re-broadcast data signals. In this embodiment, the omnidirectional antenna 47 comprises six horn shaped antennae 47-1 to 47-6 which each have a beamwidth of approximately 60° and which are arranged next to each other in a circle so as to provide a full 360° operating range.

As mentioned above, the down-link microwave data signals from the base station 7 are received by the directional antenna 45 either directly or via one or more intermediate user stations 1. The received down-link microwave signals are then passed via waveguide 49 to a microwave processing unit 51 which (i) forwards the down-link microwave signals via waveguide 53 to the omnidirectional antenna 47 for onward transmission; (ii) down-converts the down-link microwave signals and passes them via coaxial cable 55 into the user home; (iii) receives and up-converts up-link data received from the user via cable 55, and passes these to antenna 45 for transmission back to the base station 7; and (iv) receives up-link microwave signals via waveguide 53 and passes them via waveguide 49 to the directional antenna 45 for transmission back to the base station 7.

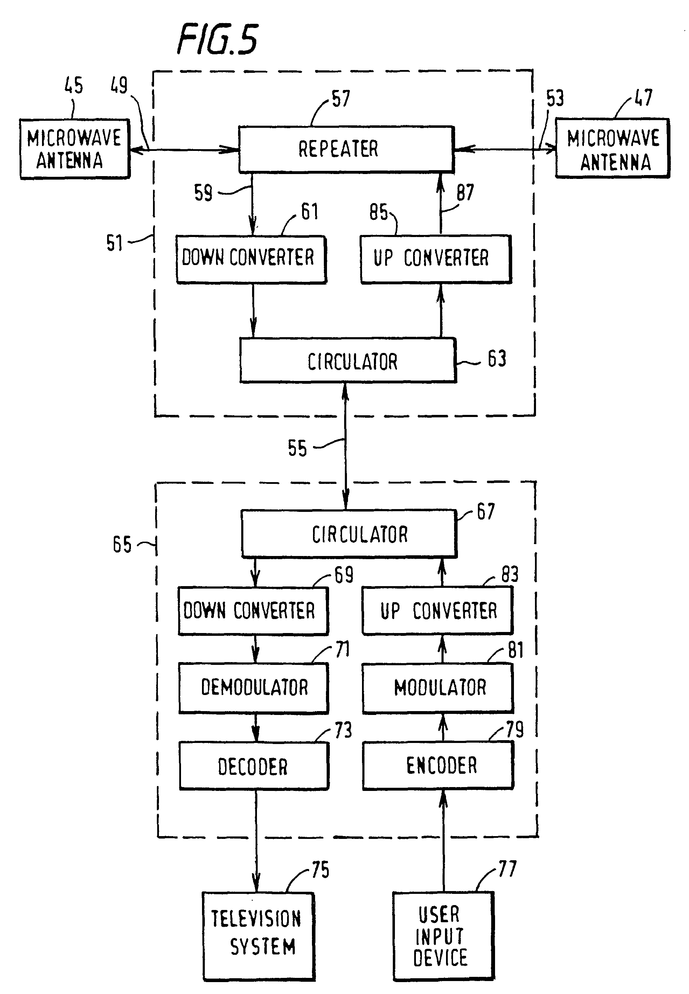

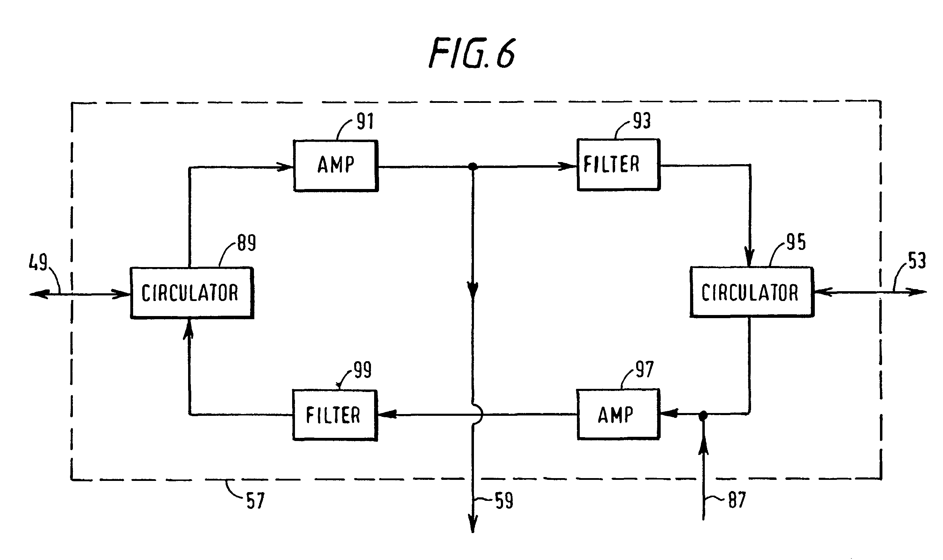

A more detailed description of a typical user station of this embodiment will now be given with reference to Figures 5 and 6. Figure 5 is a schematic block diagram illustrating the components of the user station. In operation, down-link microwave signals received by the directional microwave antenna 45 are passed via waveguide 49 to a repeater unit 57 located within the processing unit 51. The repeater unit amplifies the received down-link signals and passes them via waveguide 53 to the omnidirectional antenna 47 for onward transmission to other user stations. The repeater unit 57 is also arranged to pass the amplified received down-link signals via waveguide 59 to a down-converter unit 61 which is arranged to down-convert the received microwave signals to an intermediate frequency in the range of 1 to 4 GHz. This down-converted intermediate frequency signal is then passed to the coaxial cable 55 via a circulator 63. The intermediate frequency down-link signal passes down the coaxial cable 55 from the processing unit 51 mounted on the roof into a set top decoder box 65 located within the user home. The down-link signals received by the set top box 65 from the coaxial cable 55 are passed to a circulator 67 which routes them to a further down-converter 69 which down-converts the intermediate frequency signals to retrieve the modulated down-link data. The modulated down-link data is then demodulated by a demodulator 71 and then passed to a decoder 73 which decodes the digital video data and generates appropriate video signals for output to a television system 75.

As shown in Figure 5, the user station also comprises a user input device 77 for inputting user requests to the set top decoder box 65. In this embodiment, the user input device 77 comprises an infra-red remote controller unit. User requests which are for transmission back to the base station 7 (as up-link data) are passed to an encoder 79 where they are encoded. The encoded up-link data is then modulated by modulator 81 and then up-converted to an intermediate frequency in the range of 1 to 4 GHz by the up-converter 83. The intermediate frequency up-link data is then passed via circulator 67 out of the set top box 65 onto the coaxial cable 55 for transmission up to the microwave processing unit 51 located on the roof of the user's home. The up-link data received by the processing unit 51 is passed via circulator 63 to a second up-converter 85 which up-converts the intermediate frequency up-link data into microwave frequency signals in the range of 2 to 70 GHz. The up-link microwave signals are then passed to the repeater unit 57 which amplifies them and passes them to the directional microwave antenna 45 for transmission back to the base station 7 either directly or via one or more intermediate user stations 1. In a similar manner, microwave up-link signals received by the omnidirectional antenna 47 from other user stations are passed via waveguide 53 to the repeater unit 57 which amplifies the received up-link signals and passes them to the directional microwave antenna 45 for onward transmission back to the base station 7.

Figure 6 illustrates in more detail the components of the repeater unit 57 shown in Figure 5. As shown, the down-link microwave signals received by the directional antenna 45 are passed via waveguide 49 to a microwave circulator 89 which routes the down-link microwave signals to amplifier 91. The amplifier 91 amplifies the down-link signals and passes them, via waveguide 59 to the down-converter 61 shown in Figure 5. The amplified down-link signals are also passed to microwave filter 93 which filters the signal so as to only pass the down-link microwave signals to circulator 95. The circulator 95 passes the down-link microwave signals to the waveguide 53 for transmission to the omnidirectional antenna 47 which re-broadcasts the down-link signals for reception by other user stations. Similarly, the repeater unit 57 is arranged to receive from waveguide 53 up-link microwave signals received by the omnidirectional antenna 47 which are passed, via the circulator 95, to a low noise microwave amplifier 97 which amplifies them. The amplified up-link signals are then filtered by the microwave filter 99 so as to pass only the up-link data signals to circulator 89 for output to the directional antenna 45 via waveguide 49. The repeater unit 57 is also arranged to receive, via waveguide 87, up-link data originated from the user located within the user station. As shown, this up-link data is also amplified by the amplifier 97 and filtered by the filter 99 before being passed to the directional antenna 45 via circulator 89 and waveguide 49. The filters 93 and 99 are needed because, in practice, the circulators 89 and 95 are not perfect and some "leakage" or feedback will occur. The filters 93 and 99 therefore act to attenuate these feedback signals.

Since some subscribers to the video on demand system may be in a difficult to reach location, some of the user stations 1 shown in Figure 1 will simply be repeater stations and will not service a user located at that station. These repeater stations will therefore only comprise the two antennae 45 and 47 and the repeater unit 57 shown in Figures 5 and 6. In practice, the repeater stations will typically employ the same processing unit 51 as a typical user station, but will not be connected into the building upon which the repeater station is mounted.

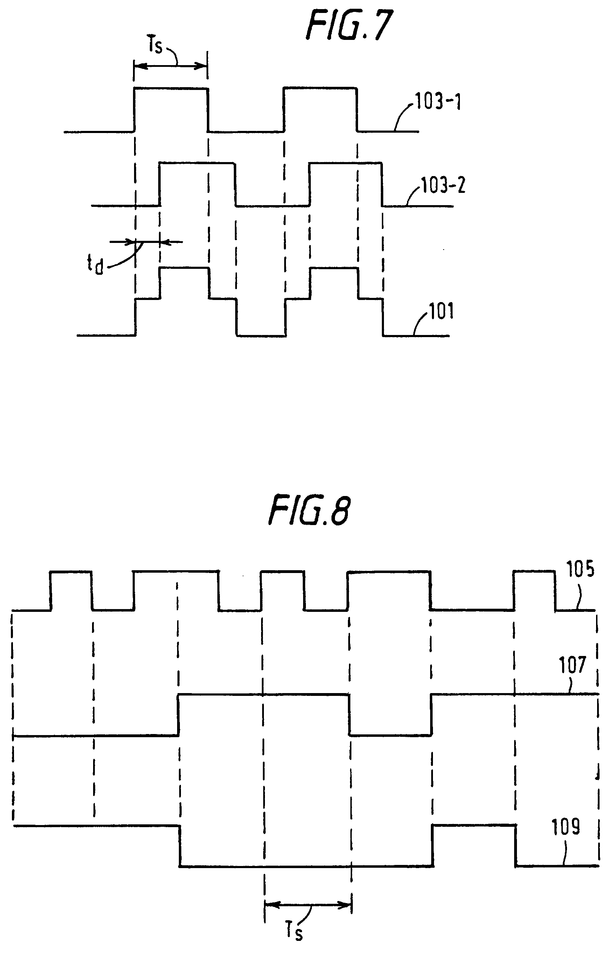

As mentioned above, in this embodiment, most of the user stations 1 are arranged to re-broadcast any down-link signals which they receive for reception by other user stations in order to provide multiple signal paths between the base station 7 and each user station. Therefore, most user stations will receive multiple copies of the down-link data signals and the base station 7 will receive multiple copies of the up-link data signals. Since the multiple signals will have travelled via different paths, they will be shifted in time relative to each other. Figure 7 illustrates the form of a received signal 101 formed by the superposition of two versions 103-1 and 103-2 of the same signal having a phase delay $t_d$ between them. As a general rule, the maximum delay $t_d$ between the multipath signals should not be greater than one tenth of the duration $T_s$ of one data symbol, otherwise equalisation or compensation is needed to be able to extract the symbol stream from the received signal. This is an important consideration in high data rate applications such as the video on demand system of the present embodiment. In particular, to provide video on demand, a down-link bandwidth of 4 M bits per second per user station is required. In a practical system, each base station 7 will supply video on demand to approximately 1000 separate users. Therefore, a down-link data rate of 4 G bits per second is required. If this down-link data is modulated and broadcast using a modulation scheme which gives 1 bit per Hz, then the above general rule means that the maximum delay between the multipath signals would be 25 pico seconds. With microwave signals travelling at the speed of light, this represents an allowable difference in path lengths of the multipath signals of approximately 7 mm, which is clearly not practical.

The present embodiment addresses this problem by using, among other things, an orthogonal frequency division multiplexing (OFDM) technique which increases the symbol period $T_s$ of the transmitted data and therefore increases the permissable maximum delay $t_d$ between the multipath signals. A more detailed description will now be given of the way in which the present invention addresses this multipath signal problem.

In this embodiment, a QPSK modulation technique is employed which provides 2 bits per Hz of bandwidth.

Figure 8 shows part of the video data string 105 which is used to generate an in-phase symbol stream 107 and a quadrature phase symbol stream 109. In particular, if the transmitted signal is given in terms of the sum of two quadrature carrier signals, i.e:

$$f_c(t) = a \cos 2\pi f_{ct} + b \sin 2\pi f_{ct} \tag{1}$$

then a and b are the in-phase and the quadrature phase symbol streams 107 and 109 whose values are generated by successive pairs of video data bits from the video data stream 105 in accordance with, for example, the following table:

| Video data bit pair | In-phase symbol (a) | Quadrature phase symbol (b) |
|---|---|---|
| 00 | +1 | +1 |
| 01 | -1 | +1 |
| 11 | -1 | -1 |
| 10 | +1 | -1 |

Therefore, as shown in Figure 8, since 2 bits of the video data stream 105 are used to generate each symbol of the symbol streams 107 and 109, the symbol period $T_s$ is twice that of the video data period $T_b$.

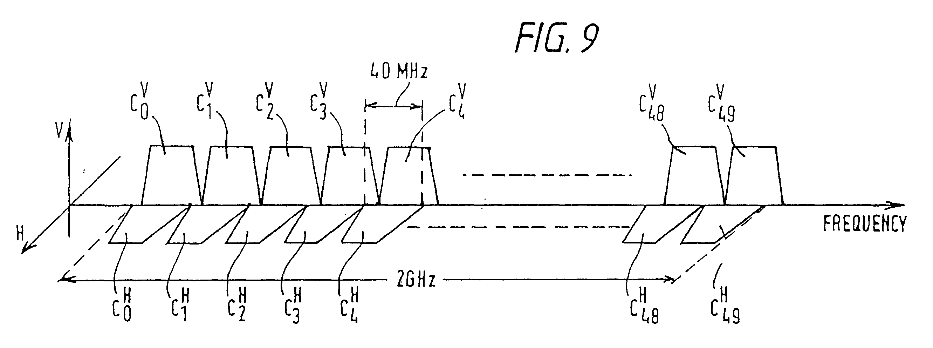

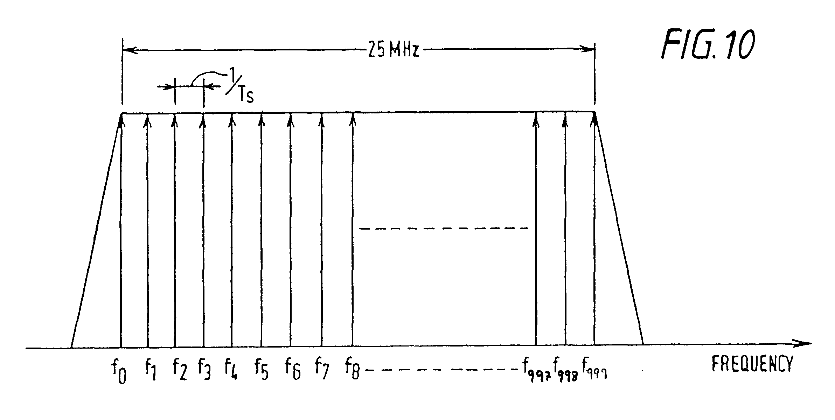

In order to increase the symbol period $T_s$ of the transmitted signal further, rather than using the video data stream 105 directly to generate the symbol streams 107 and 109, in this embodiment, multiple carrier frequencies are employed, with each carrying a portion of the video data 105. More specifically, in this embodiment, a channel data capacity of 5 G bits per second is provided for the down-link data, which (using the above QPSK modulating technique) requires a symbol rate of 2.5 G symbols per second. In this embodiment, these 2.5 G symbols per second are modulated onto 100,000 different carrier signals, giving a transmitted symbol rate $(1/T_s)$ per carrier signal of 25 K symbols per second. In this embodiment, both the horizontal and the vertical polarisation components of the transmitted microwave signals are used to carry data. In order to reduce inter-symbol interference (ISI), the carrier frequencies are spaced apart by $1/T_s$, i.e. by 25 KHz, which is known in the art as orthogonal frequency division multiplexing. To provide 100000 separate carrier frequencies using vertical and horizontal polarisation components, this requires a total channel bandwidth of approximately 1.25 GHz. In this embodiment, a channel bandwidth of 2 GHz is provided and the carrier signals are divided into 50 frequency channels for the horizontally polarised components and 50 frequency channels for the vertically polarised component, with each channel extending over 40 MHz and with a spacing of 15 MHz between the carrier frequencies used in adjacent channels. This is illustrated in Figures 9 and 10. In particular, Figure 9 shows the 2 GHz bandwidth which is used in this embodiment, which is divided into 50 frequency channels $C_0^H$ - $C_{49}^H$ for the horizontal polarisation component and 50 frequency channels $C_0^V$ - $C_{49}^V$ for the vertical polarisation component. Figure 10 shows the 1000 separate carrier frequencies provided in each of the channels $C_i$ shown in Figure 9. As shown, the carrier frequencies $f_0-f_{999}$ are equally spaced over the channel, with the spacing between adjacent carrier frequencies being $1/T_s$, i.e. 25 KHz. Thus leaving a 15 MHz deadband between the carrier frequencies in adjacent channels. Therefore, by transmitting the data on separate carrier frequencies, the symbol period $T_s$ of the transmitted data has been increased to 40 micro-seconds, thereby providing an allowed maximum delay between the multipath signals (in order to be able to extract the transmitted symbol stream without equalisation or compensation) of 4 micro-seconds, which is equivalent to a more realisable difference in path lengths of approximately 1.2 km.

As will be appreciated by those skilled in the art, in order to provide the required 4 M bits per second to each user station, each user station must retrieve the modulated data from eighty of the carrier signals. In this embodiment, this is achieved by assigning eighty separate frequencies for a given polarisation in a given channel to each of the user stations 1. In other words, for 1000 user stations, 500 will use the horizontal polarisation component of the transmitted microwave signal and the other 500 will use the vertical polarisation component and the 500 users of each polarisation component will share the carrier signals in the respective 50 channels. In this embodiment, the user stations are shared equally over the 50 channels so that 10 user stations will share each frequency channel, with each of the 10 users per channel receiving data from eighty different carrier frequencies within the channel. As those skilled in the art will appreciate, in order to simultaneously receive data modulated onto eighty different carrier signals, the demodulator 71 in the user station will have to simultaneously demodulate each of the eighty carrier frequencies. This is achieved using a digital signal processor which is arranged to perform a fourier analysis of the assigned frequency channel to extract the data which is modulated onto the eighty carrier frequencies assigned to that user.

In this embodiment, the majority of the system's data capacity is required for down-link data. In this embodiment, each user station is allowed to transmit up to 400 k bits per second back to the base station using a carrier frequency specifically assigned to that user station. As will be appreciated by those skilled in the art, the carrier frequencies used by all the user stations in the cell for up-link data communications with the base station are located in a separate frequency band from the frequency band allocated for the communication of the down link signals.

A number of modifications which can be made to the above embodiment will now be described.

In the above embodiment, user stations either used the horizontal or the vertical polarisation component of the received microwave signal for down-link communications. This is not essential. In an alternative embodiment, some of the user stations may use both the horizontal and the vertical polarisation components of the received microwave signal. Additionally, in the above embodiment, each user station was operable to use carrier frequencies within a designated frequency channel. This is also not essential. Some user stations may use carrier frequencies in one or more frequency channels. However, this increases the complexity of the processing electronics used at those user stations.

In the above embodiment, each user station used the same carrier signals in the allocated frequency channel. In an alternative embodiment, each user may "frequency hop" around the carrier frequencies within the frequency channel or even within other frequency channels. However, in such an embodiment, a more complex user station is required.

In the above embodiment, a QPSK modulation technique was used to modulate the up-link and the down-link data on each of the carrier frequencies. In an alternative embodiment, different modulation techniques may be employed for modulating the different carrier signals. This allows the use of more efficient modulation techniques to be used in certain frequencies. For example, if a user station establishes that there is a good communication link between the base station and the user station on a particular frequency, then it may signal the base station to use a more efficient modulation technique which will provide more bits per Hz for that carrier frequency.

The above embodiments describe a video distribution system for providing video signals to a plurality of users upon user demand. As those skilled in the art will appreciate, the data distribution system described above can be used in other applications. For example, the data distribution system may be used to provide a broadband communications link between the users and, for example, the internet. It may also be used to connect together computer equipment located at the respective user stations.

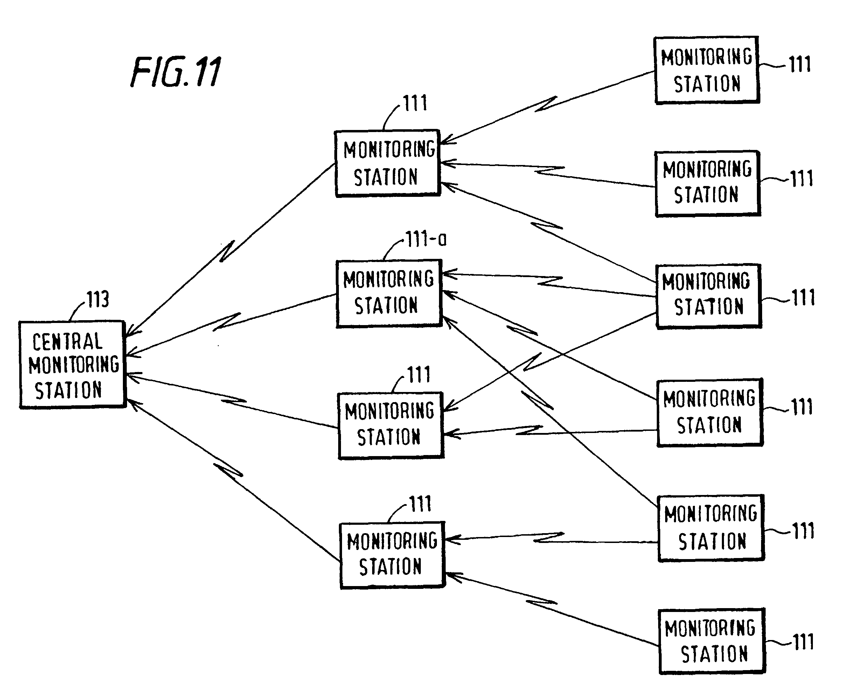

In the above embodiments, data is passed in both directions between the base station and the user stations. As those skilled in the art will appreciate, the communication link between the base station and the user stations may be uni-directional. For example, each of the user stations may operate to collect data and to transmit the data to a central monitoring system located at the base station. This kind of monitoring system is illustrated in Figure 11. As shown, the system comprises a number of monitoring stations 111 which communicate either directly with a central monitoring station 113 or indirectly via intermediate monitoring stations. As with the first embodiment, some of the intermediate monitoring stations and the central monitoring stations will receive multiple copies of the transmitted data, and the same orthogonal frequency division multiplexing technique is preferably used to overcome the multipath signal problem. This type of monitoring system may be embodied, for example, in a surveillance system, in which each monitoring station 111 comprises a video camera and transmits video data signals back to the central monitoring system 113 either directly or indirectly via an intermediate monitoring station.

In the above embodiments microwave frequency links were provided between the communication stations. A similar communication system can be provided using, for example, visible or infrared frequency carrier signals.

In the above embodiments, each of the user stations was arranged to re-broadcast signals which it receives. As a person skilled in the art will appreciate, this is not essential for all user stations within the cell. In particular, some user stations might simply receive the multipath signals and extract the necessary video data, without re-transmitting the signals for reception by other user stations.

In the above embodiments, the user stations were associated with homes of businesses. The communications system described above can also be used for mobile user stations. In such an embodiment, if user stations are allowed to move between adjacent cells, then "handover" procedures similar to those used in mobile telephone communication systems will be required.

**Claims**

1.  A communication system comprising:

    a broadcast station (7) for broadcasting information-bearing signals in the microwave frequency band or above;
    a plurality of repeater stations (1) which are located so as to be in direct line-of-sight communication with said broadcast station and each comprising:

    i) a receive antenna (45) for receiving said information-bearing signals broadcast by said broadcast station;
    ii) a repeater unit (57) which is arranged to amplify the information-bearing signals received by said receive antenna and to output the amplified information-bearing signals; and
    iii) a transmit antenna (47) which is arranged to broadcast the amplified information-bearing signals output by said repeater unit;

    wherein at least two of said repeater stations are arranged to broadcast the amplified information-bearing signals into a common area; and
    at least one receiver station (1-a) which is located within said common area and which is not in line-of-sight communication with said broadcast station, the or each receive station comprising:

    i) a receive antenna (49) arranged to receive the amplified information-bearing signals broadcast from said at least two repeater stations; and
    ii) means (71) for processing the received signals to recover the information transmitted by said broadcast station.

2.  A communication system according to claim 1, wherein said broadcast station (7) is operable to broadcast data modulated on to a plurality of different carrier frequencies.

3.  A communication system according to claim 2, wherein the difference in frequency between adjacent carrier frequencies is an integer multiple of the symbol rate $(1/T_s)$ of the transmitted data signals.

4.  A communication system according to claim 2, wherein said carrier frequencies are grouped into a plurality of groups, and wherein the difference in frequency between adjacent carrier frequencies in each group is an integer multiple of the symbol rate $(1/T_s)$ of the transmitted data signals.

5.  A communication system according to claim 2, 3 or 4, wherein said processing means (71) is operable to perform a Fourier analysis of the received signals in order to recover said information.

6.  A communication system according to any preceding claim, wherein said receive antenna (45) of one or more of said repeater stations (1) is directional in nature and is aligned with said broadcast station.

7.  A communication system according to any preceding claim, wherein said receive antenna (45) of one or more of said receiver stations (1-a) is directional in nature and is aligned with said repeater stations (1) from which it is arranged to receive said amplified information-bearing signals.

8.  A communication system according to any preceding claim, wherein the transmit antenna (47) of at least one of said repeater stations (1) is omnidirectional in nature.

9. A communication system according to any preceding claim, wherein one or more of said repeater stations (1) are also operable to transmit information-bearing signals back to the broadcast station (7) from said receive antenna (45).

10. A communication system according to claim 9, wherein said one or more receiver stations (1-a) is operable to transmit information-bearing signals back to said at least two repeater stations (1) from its receive antenna and wherein at least one of said at least two repeater stations is arranged to receive said transmitted information-bearing signals from said receiver station (1-a) through its transmit antenna (47).

11. A communication system according to claim 10, wherein said repeater unit (57) comprises at least two circulators (89, 95) operable for separating the information-bearing signals received from said broadcast station (7) from information-bearing signals received by said transmit antenna (47) for transmission back to said broadcast station (7).

12. A communication system according to claim 11, wherein said repeater unit (57) comprises at least two filters (93, 99) for filtering the signals between the circulators (89, 95) so as to reduce any feedback signals caused by said circulators.

13. A communication system according to any preceding claim, wherein one or more of said repeater stations (1) further comprises means (61) for down converting the frequency of the received information-bearing signals and means (63) for passing the downconverted information-bearing signals to a user terminal (65) located at said repeater station (1).

14. A communication system according to any preceding claim, wherein the location of each of said repeater stations (1) is fixed relative to said broadcast station (7).

15. A communication system according to any preceding claim, wherein the location of the or each receiver station (1-a) is fixed relative to said broadcast station (7).

16. A communication system according to any preceding claim, wherein the broadcast station (7) is operable to broadcast broadband communications to said repeater stations (1).

17. A communication system according to any preceding claim, wherein one or more of said receiver stations (1-a) are associated with a data input device (77), a data output device (75) or a data input and data output device.

18. A communication system according to claim 17, wherein said data input device, data output device or data input and output device comprises at least one of: a computer, a computer network, a video recorder, or a television system.

19. A communication system according to any preceding claim, wherein said broadcast station (7) is associated with at least one of the internet, a video distribution system, or a multi-media data distribution system.

20. A communication system according to any preceding claim, wherein the or each receiver station (1-a) further comprises a repeater unit (57) and a transmit antenna (47) for amplifying and re-broadcasting the received information-bearing signals for reception by other receiver stations.

21. A communication system according to any preceding claim, wherein said broadcast station (7) is operable to broadcast data on horizontal and vertical components of the microwave signal.

22. A communication system according to any preceding claim, wherein said broadcast station (7) is a base station which is operable to transmit said information-bearing signals to a plurality of receiver stations (1).

23. A communication system according to claim 1, comprising a plurality of said broadcast stations (7) each associated with a user terminal and each operable to transmit information-bearing signals directly or indirectly to said receiver station.

24. A method of communicating between a broadcast station (7) and one or more receiver stations (1) comprising the steps of:

broadcasting information-bearing signals in the microwave frequency band or above from the broadcasting station (7);
receiving said information-bearing signals at each of a plurality of repeater stations (1) which are in line-of-sight communication with said broadcast station;

- amplifying said information-bearing signals received at said plurality of repeater stations;

broadcasting the amplified information-bearing signals from each of said plurality of repeater stations so that at least two of said repeater stations broadcast the amplified information-bearing signals into a common area;
locating at least one receiver station (1-a) within said common area which is not in line-of-sight communication with said broadcast station (7);
receiving at said at least one receiver station the amplified information-bearing signals broadcast from said at least two repeater stations; and
processing at said at least one receiver station (1-a) said received signals to recover the information transmitted-by said broadcast station.

25. A method according to claim 24, wherein prior to said step- of broadcasting said signals from said broadcasting station, the method further comprises the step of modulating information data onto a plurality of different carrier frequencies.

26. A method according to claim 25, wherein the difference in frequency between adjacent carrier frequencies is an integer multiple of the symbol rate ($1/T_s$) of the transmitted data signals.

27. A method according to claim 25, wherein said carrier frequencies are grouped into a plurality of groups and wherein the difference in frequency between adjacent carrier frequencies in each group is an integer multiple of the symbol rate ($1/T_s$) of the transmitted data signals.

28. A method according to claim 25, 26 or 27, wherein said processing steps performs a Fourier analysis of the received signals in order to recover said information.

29. A method according to any of claims 24 to 28, further comprising the step of transmitting information-bearing signals from one or more of said repeater stations (1) back to said broadcast station (7).

30. A method according to claim 29, further comprising the step of transmitting information-bearing signals from said one or more receiver stations (1-a) back to said at least two repeater stations (1) and the step of transmitting, from said repeater stations, the information-bearing signals received from said receiver station back to said broadcast station (7).

31. A method according to any of claims 24 to 30, further comprising the steps of downconverting at one or more of said repeater stations (1) the frequency of the received information-bearing signals and passing the downconverted information-bearing signals to a user terminal located at the repeater station.

32. A method according to any of claims 24 to 31, further comprising the step of amplifying and re-broadcasting the information-bearing signals received at said receiver station (1-a) for reception by other receiver stations.

33. A method according to any of claims 24 to 32, wherein said broadcasting step is operable to broadcast data on horizontal and vertical components of said microwave signal.


**Patentansprüche**

1. Kommunikationssystem, aufweisend:

eine Sendestation (7) zum Ausstrahlen informationstragender Signale im Mikrowellen-Frequenzband oder darüber,
mehrere Repeaterstationen (1), die in direkter Sichtlinienverbindung zu der Sendestation angeordnet sind und jeweils aufweisen:

(i) eine Empfangsantenne (45) zum Empfang der von der Sendestation ausgestrahlten informationstragenden Signale,

(ii) eine Repeatereinheit (57) zur Verstärkung der von der Empfangsantenne empfangenen informationstragenden Signale und zur Ausgabe der verstärkten informationstragenden Signale, und

(iii) eine Sendeantenne (47) zum Ausstrahlen der von der Repeatereinheit ausgegebenen verstärkten informationstragenden Signale,

wobei mindestens zwei der Repeaterstationen zum Ausstrahlen der verstärkten informationstragenden Signale in einen gemeinsamen Bereich angeordnet sind, und

mindestens eine Empfangsstation (1-a), die in dem gemeinsamen Bereich angeordnet ist und sich nicht in Sichtlinienverbindung zur Sendestation befindet und aufweist:

i) eine Emfangsantenne (49) zum Empfang der von den mindestens zwei Repeaterstationen ausgestrahlten verstärkten informationstragenden Signale, und

ii) eine Einrichtung (71) zur Verarbeitung der empfangenen Signale, um die von der Sendestation ausgesendete Information wiederzugewinnen.

2. System nach Anspruch 1, wobei die Sendestation (7) zum Ausstrahlen von Daten, die auf mehrere verschiedene Trägerfrequenzen moduliert sind, betreibbar ist.

3. System nach Anspruch 2, wobei die Frequenzdifferenz zwischen benachbarten Trägerfrequenzen ein ganzzahliges Vielfaches der Symbolrate ($1/T_s$) des gesendeten Datensignals darstellt.

4. System nach Anspruch 2, wobei die Trägerfrequenzen in mehrere Gruppen eingeteilt sind und die Frequenzdifferenz zwischen benachbarten Trägerfrequenzen einer jeweiligen Gruppe ein ganzzahliges Vielfaches der Symbolrate ($1/T_s$) des gesendeten Datensignals darstellt.

5. System nach Anspruch 2, 3 oder 4, wobei die Verarbeitungseinrichtung (71) zur Durchführung einer Fourier-Analyse des empfangenen Signals betreibbar ist, um die genannte Information wiederzugewinnen.

6. System nach einem der vorhergehenden Ansprüche, wobei die Empfangsantenne (45) einer oder mehrerer der Repeaterstationen (1) gerichtet ist und auf die Sendestation ausgerichtet ist.

7. System nach einem der vorhergehenden Ansprüche, wobei die Empfangsantenne (45) einer oder mehrerer der Empfangsstationen (1-a) gerichtet ist und auf die Repeaterstationen (1) ausgerichtet ist, für die sie zum Empfang der verstärkten informationstragenden Signale eingerichtet ist.

8. System nach einem der vorhergehenden Ansprüche, wobei die Sendeantenne (47) mindestens einer der Repeaterstationen (1) omnidirektional ist.

9. System nach einem der vorhergehenden Ansprüche, wobei eine oder mehrere der Repeaterstationen (1) auch zum Senden von informationstragenden Signalen von der Empfangsantenne (45) zurück zur Sendestation (7) eingerichtet sind.

10. System nach Anspruch 9, wobei die eine oder mehreren Empfangsstationen (1-a) zum Aussenden von informationstragenden Signalen von ihrer jeweiligen Empfangsantenne aus zurück zu den mindestens zwei Repeaterstationen (1) betreibbar sind und mindestens eine der genannten mindestens zwei Repeaterstationen zum Empfang der gesendeten informationstragenden Signale von der Empfangsstation (1-a) durch ihre Sendeantenne (47) eingerichtet ist.

11. System nach Anspruch 10, wobei die Repeatereinheit (57) mindestens zwei Zirkulatoren (89, 95) zum Trennen der von der Sendestation (7) empfangenen informationstragenden Signale von durch die Sendeantenne (47) empfangenen informationstragenden Signalen zur Übertragung zurück zu der Sendestation (7) aufweist.

12. System nach Anspruch 11, wobei die Repeatereinheit (57) mindestens zwei Filter zum Filtern der Signale zwischen den Zirkulatoren (89, 95) aufweist, um jedwede von den Zirkulatoren verursachte Rückkopplungssignale zu verringern.

EP 0 995 279 B1

**13.** System nach einem der vorhergehenden Ansprüche, wobei eine oder mehrere der Repeaterstationen (1) außerdem eine Einrichtung (61) zum Abwärts-Wandeln der Frequenz der empfangenen informationstragenden Signale und eine Einrichtung (63) zum Weiterleiten der abwärts-gewandelten informationstragenden Signale zu einem bei der Repeaterstation (1) befindlichen Benutzerterminal (65) aufweist.

**14.** System nach einem der vorhergehenden Ansprüche, wobei der Ort der jeweiligen Repeaterstationen (1) bezüglich der Sendestation (7) festliegt.

**15.** System nach einem der vorhergehenden Ansprüche, wobei der Ort der jeweiligen Empfangsstation (1-a) bezüglich der Sendestation (7) festliegt.

**16.** System nach einem der vorhergehenden Ansprüche, wobei die Sendestation (7) zum Ausstrahlen von Breitbandübermittlungen an die Repeaterstationen (1) betreibbar ist.

**17.** System nach einem der vorhergehenden Ansprüche, wobei eine oder mehrere der Empfangsstationen (1-a) einem Dateneingabegerät (77), einem Datenausgabegerät (75) oder einem Dateneingabe- und Datenausgabegerät zugeordnet sind.

**18.** System nach Anspruch 17, wobei das Dateneingabegerät, das Datenausgabegerät oder das Dateneingabe- und -ausgabegerät einen Computer, ein Computernetzwerk, einen Videorecorder und/oder ein Fernsehsystem aufweist.

**19.** System nach einem der vorhergehenden Ansprüche, wobei die Sendestation (7) dem Internet, einem Videoverteilersystem und/oder einem Multimedia-Datenverteilersystem zugeordnet ist.

**20.** System nach einem der vorhergehenden Ansprüche, wobei die Empfangsstation (1-a) außerdem eine Repeatereinheit (57) und eine Sendeantenne (47) zum Verstärken und Wiederausstrahlen der empfangenen informationstragenden Signale für einen Empfang durch andere Empfangsstationen aufweist.

**21.** System nach einem der vorhergehenden Ansprüche, wobei die Sendestation (7) zum Ausstrahlen von Daten auf horizontalen und vertikalen Komponenten des Mikrowellensignals betreibbar ist.

**22.** System nach einem der vorhergehenden Ansprüche, wobei die Sendestation (7) eine Basisstation darstellt, die zum Aussenden der informationstragenden Signale an mehrere Empfangsstationen (1) betreibbar ist.

**23.** System nach Anspruch 1 mit mehreren der genannten Sendestationen (7), die jeweils einem Benutzerterminal zugeordnet sind und jeweils zum Aussenden von informationstragenden Signalen direkt oder indirekt zu der Empfangsstation betreibbar sind.

**24.** Verfahren zur Kommunikation zwischen einer Sendestation (7) und einer oder mehreren Empfangsstationen (1) mit folgenden Schritten:

Ausstrahlen von informationstragenden Signalen im Mikrowellen-Frequenzband oder darüber von der Sendestation (7),
Empfangen der informationstragenden Signale an jeder einer Vielzahl an Repeaterstationen (1), die sich in Sichtlinien-Verbindung zur Sendestation befinden,
Verstärken der von den Repeaterstationen empfangenen informationstragenden Signale,
Ausstrahlen der verstärkten informationstragenden Signale von jeder der Repeaterstationen aus, so daß mindestens zwei der Repeaterstationen die verstärkten informationstragenden Signale in einen gemeinsamen Bereich senden,
Anordnen mindestens einer Empfangsstation (1-a) innerhalb des genannten gemeinsamen Bereichs, die sich nicht in Sichtlinienverbindung zu der Sendestation (7) befindet,
Empfangen der von den mindestens zwei Repeaterstationen ausgestrahlten verstärkten informationstragenden Signale bei der mindestens einen Empfangsstation, und
Verarbeiten der empfangenen Signale bei der mindestens einen Empfangsstation (1-a), um die von der Sendestation ausgesendete Information wiederzugewinnen.

**25.** Verfahren nach Anspruch 24, mit einem Schritt zum Modulieren von Informationsdaten auf mehrere verschiedene Trägerfrequenzen vor dem Schritt zum Ausstrahlen der Signale durch die Sendestation.

26. Verfahren nach Anspruch 25, wobei die Frequenzdifferenz zwischen benachbarten Trägerfrequenzen ein ganzzahliges Vielfaches der Symbolrate $(1/T_s)$ des ausgesendeten Datensignals beträgt.

27. Verfahren nach Anspruch 25, wobei die Trägerfrequenzen in mehrere Gruppen eingeteilt sind und die Frequenzdifferenz zwischen benachbarten Trägerfrequenzen einer jeweiligen Gruppe ein ganzzahliges Vielfaches der Symbolrate $(1/T_s)$ des ausgesendeten Datensignals beträgt.

28. Verfahren nach Anspruch 25, 26 oder 27, wobei der Verarbeitungsschritt eine Fourier-Analyse der empfangenen Signale durchführt, um die genannte Information wiederzugewinnen.

29. Verfahren nach einem der Ansprüche 24 bis 28 mit einem Schritt zum Senden von informationstragenden Signalen von einer oder mehreren der Repeaterstationen (1) zurück zur Sendestation (7).

30. Verfahren nach Anspruch 29 mit einem Schritt zum Senden von informationstragenden Signalen von der einen oder mehreren Empfangsstationen (1-a) zurück zu den mindestens zwei Repeaterstationen (1) und einem Schritt zum Senden der von der Empfangsstation her empfangenen informationstragenden Signale durch die Repeaterstationen zurück zur Sendestation (7).

31. Verfahren nach einem der Ansprüche 24 bis 30 mit einem Schritt zum Abwärts-Wandeln der Frequenz der empfangenen informationstragenden Signale bei einer oder mehreren Repeaterstationen (1) und zum Weiterleiten der abwärts-gewandelten informationstragenden Signale an ein bei der Repeaterstation angeordnetes Benutzerterminal.

32. Verfahren nach einem der Ansprüche 24 bis 31 mit einem Schritt zum Verstärken und Wiederausstrahlen der bei der Empfangsstation (1-a) empfangenen informationstragenden Signale zum Empfang durch andere Empfangsstationen.

33. Verfahren nach einem der Ansprüche 24 bis 32, wobei der Ausstrahlungsschritt zum Ausstrahlen von Daten auf horizontalen und vertikalen Komponenten des Mikrowellensignals betreibbar ist.

**Revendications**

1. Un système de communication comprenant :

- une station d'émission (7) pour émettre des signaux comportant de l'information dans la bande des hyperfréquences ou supérieure ;

  une pluralité de stations répéteurs (1) qui sont situées pour permettre la communication à vision directe avec ladite station d'émission et comprenant chacune :

  i) une antenne de réception (45) pour recevoir lesdits signaux portant de l'information et émis par ladite station d'émission ;
  ii) une unité répéteur (57) agencée pour amplifier les signaux portant de l'information reçus par ladite antenne de réception et pour fournir en sortie les signaux amplifiés portant de l'information ; et
  iii) une antenne d'émission (47) agencée pour émettre les signaux amplifiés portant de l'information et fournis en sortie par ladite unité répéteur ;

  dans lequel au moins deux desdites stations répéteurs sont agencées pour émettre les signaux amplifiés portant de l'information vers une zone commune ; et
  au moins une station de réception (1-a) située à l'intérieur de ladite zone commune et qui n'est pas en communication à vision directe avec ladite station d'émission, la ou chaque station de réception comprenant :

  i) une antenne de réception (49) agencée pour recevoir les signaux amplifiés portant de l'information émis à partir desdites au moins deux stations répéteurs ; et

ii) des moyens (71) pour traiter les signaux reçus pour récupérer l'information transmise par ladite station d'émission.

2. Un système de communication selon la revendication 1, dans lequel ladite station d'émission (7) est susceptible de fonctionner pour émettre des données modulées sur une pluralité de fréquences porteuses différentes.

3. Un système de communication selon la revendication 2, dans lequel la différence de fréquence entre des fréquences porteuses adjacentes est un multiple entier du débit de symbole ($1/T_s$) des signaux de données transmis.

4. Un système de communication selon la revendication 2, dans lequel lesdites fréquences porteuses sont groupées en une pluralité de groupes et dans lequel la différence de fréquence entre des fréquences porteuses adjacentes dans chaque groupe est un multiple entier du débit des symboles ($1/T_s$) des signaux de données transmis.

5. Un système de communication selon la revendication 2, 3 ou 4, dans lequel lesdits moyens de traitement (71) sont susceptibles de fonctionner pour effectuer une analyse de Fourier des signaux reçus afin de récupérer ladite information.

6. Un système de communication selon l'une quelconque des revendications précédentes, dans lequel ladite antenne de réception (45) de l'une ou plusieurs desdites stations répéteurs (1) est de nature directionnelle en étant alignée avec ladite station d'émission.

7. Un système de communication selon l'une quelconque des revendications précédentes, dans lequel ladite antenne de réception (45) de l'une ou plusieurs desdites stations de réception (1-a) est de nature directionnelle et est alignée avec lesdites stations répéteurs (1) à partir desquelles elle est agencée pour recevoir lesdits signaux amplifiés portant de l'information.

8. Un système de communication selon l'une quelconque des revendications précédentes, dans lequel l'antenne d'émission (47) d'au moins l'une desdites stations répéteurs (1) est de nature omnidirectionnelle.

9. Un système de communication selon l'une quelconque des revendications précédentes, dans lequel une ou plusieurs desdites stations répéteurs (1) est (sont) également susceptible(s) de fonctionner pour transmettre des signaux portant de l'information en retour vers la station d'émission (7) à partir de ladite antenne de réception (45).

10. Un système de communication selon la revendication 9, dans lequel ladite une ou plusieurs station(s) de réception (1-a) est (sont) susceptible(s) de fonctionner pour transmettre des signaux portant de l'information en retour vers lesdites au moins deux stations répéteurs (1) à partir de son antenne de réception, et dans lequel au moins l'une parmi lesdites au moins deux stations répéteurs est agencée pour recevoir lesdits signaux transmis portant de l'information à partir de ladite station de réception (1-a) via son antenne d'émission (47).

11. Un système de communication selon la revendications 10, dans lequel ladite unité répéteur (57) comprend au moins deux circulateurs (89, 95) susceptibles de fonctionner pour séparer les signaux portant de l'information reçus à partir de ladite station d'émission (7) des signaux portant de l'information reçus par ladite antenne d'émission (47), pour la transmission en retour vers ladite station d'émission (7).

12. Un système de communication selon la revendication 11, dans lequel ladite unité répéteur (57) comprend aux moins deux filtres (93, 99) pour filtrer les signaux entres les circulateurs (89, 95) afin de limiter d'éventuels signaux de rétroaction introduits par lesdits circulateurs.

13. Un système de communication selon l'une quelconque des revendications précédentes, dans lequel une ou plusieurs desdites stations répéteurs (1) comprend en outre des moyens (61) pour convertir vers une fréquence plus basse la fréquence des signaux reçus portant de l'information et des moyens (63) pour faire passer les signaux portant de l'information convertis vers une fréquence plus basse vers un terminal utilisateur (65) situé au niveau de ladite station répéteur.

14. Un système de communication selon l'une quelconque des revendications précédentes, dans lequel l'emplacement de chacune desdites stations répéteurs (1) est fixe par rapport à ladite station d'émission (7).

15. Un système de communication selon l'une quelconque des revendications précédentes, dans lequel l'emplacement de la station de réception ou chaque station de réception (1-a) est (sont) fixe(s) par rapport à ladite station d'émission (7).

16. Un système de communication selon l'une quelconque des revendications précédentes, dans lequel la station d'émission (7) est susceptible de fonctionner pour émettre des communications large bande vers lesdites stations répéteurs (1).

17. Un système de communication selon l'une quelconque des revendications précédentes, dans lequel une ou plusieurs desdites stations de réception (1-a) est (sont) associée(s) à un dispositif d'entrée de données (77), à un dispositif de sortie de données (75) ou un dispositif d'entrée et de sortie de données.

18. Un système de communication selon la revendication 17, dans lequel ledit dispositif d'entrée de données, le dispositif de sortie de données ou le dispositif d'entrée et de sortie de données comprend au moins l'un parmi : un ordinateur, un réseau informatique, un magnétoscope ou un système de télévision.

19. Un système de communication selon l'une quelconque des revendications précédentes, dans lequel ladite station d'émission (7) est associée à au moins l'un parmi : l'Internet, un système de distribution vidéo ou un système de distribution de données multimédia.

20. Un système de communication selon l'une quelconque des revendications précédentes, dans lequel ladite ou chaque station de réception (1-a) comprend en outre une unité répéteur (57) et une antenne d'émission (47) pour amplifier et pour réémettre les signaux reçus portant de l'information pour la réception par d'autres stations de réception.

21. Un système de communication selon l'une quelconque des revendications précédentes, dans lequel ladite station d'émission (7) est susceptible de fonctionner pour émettre des données sur les composantes horizontale et verticale du signal hyperfréquence.

22. Un système de communication selon l'une quelconque des revendications précédentes, dans lequel ladite station d'émission (7) est une station de base susceptible de fonctionner pour transmettre lesdits signaux portant de l'information vers une pluralité de stations de réception (1).

23. Un système de communication selon la revendication 1, comprenant une pluralité desdites stations d'émission (7) associées chacune à un terminal d'utilisateur et chacune susceptible de fonctionner pour transmettre des signaux contenant de l'information directement ou indirectement à ladite station de réception.

24. Un procédé de communication entre une station d'émission (7) et une ou plusieurs stations de réception (1) comprenant les étapes consistant :

- à émettre des signaux portant de l'information dans la bande des hyperfréquences ou supérieure, à partir de la station d'émission (7) ;
- à recevoir lesdits signaux portant de l'information à chacune parmi une pluralité de stations répéteurs (1) qui sont en communication par vision directe avec ladite station d'émission ;
- à amplifier lesdits signaux portant de l'information reçus à ladite pluralité de stations répéteurs ;
- à émettre les signaux amplifiés portant de l'information à partir de chacune de ladite pluralité de stations répéteurs de sorte qu'au moins deux desdites stations répéteurs émettent lesdits signaux amplifiés portant de l'information vers une zone commune ;
- à situer au moins une station de réception (1-a) à l'intérieur de ladite zone commune qui ne soit pas en communication par vision directe avec ladite station d'émission (7) ;
- à recevoir à ladite au moins une station de réception les signaux amplifiés portant de l'information et émis par lesdites au moins deux stations répéteurs ; et
- à traiter à ladite au moins une station de réception (1-a) lesdits signaux reçus, afin de récupérer l'information transmise par ladite station d'émission.

25. Un procédé selon la revendication 24, dans lequel, avant ladite étape d'émission desdits signaux à partir de ladite station d'émission, le procédé comprend en outre l'étape consistant à moduler des données d'information sur une pluralité de différentes fréquences porteuses.

**26.** Un procédé selon la revendication 25, dans lequel la différence de fréquence entre des fréquences porteuses adjacentes est un multiple entier du débit de symbole ($1/T_s$) des signaux de données émis.

**27.** Un procédé selon la revendication 25, dans lequel lesdites fréquences porteuses sont groupées en une pluralité de groupes et dans lequel la différence de fréquence entre des fréquences porteuses adjacentes dans chaque groupe est un multiple entier du débit de symbole ($1/T_s$) des signaux émis.

**28.** Un procédé selon la revendication 25, 26 ou 27, dans lequel lesdites étapes de traitement effectuent une analyse de Fourier des signaux reçus afin de récupérer ladite information.

**29.** Un procédé selon l'une quelconque des revendications 24 à 28, comprenant en outre l'étape consistant à émettre des signaux portant de l'information à partir d'une ou plusieurs desdites stations répéteurs (1) en retour vers ladite station d'émission (7).

**30.** Un procédé selon la revendication 29, comprenant en outre l'étape consistant à émettre des signaux portant de l'information à partir desdites une ou plusieurs stations de réception (1-a) en retour vers lesdites au moins deux stations répéteurs (1), et l'étape consistant à transmettre, à partir desdites stations répéteurs, les signaux reçus portant de l'information à partir de ladite station de réception en retour vers ladite station d'émission (7).

**31.** Un procédé selon l'une quelconque des revendications 24 à 30, comprenant en outre les étapes consistant à convertir vers une fréquence plus basse au niveau d'une ou plusieurs desdites stations répéteurs (1), la fréquence des signaux reçus portant de l'information et à faire passer les signaux portant de l'information et convertis vers une fréquence plus basse à un terminal utilisateur situé au niveau de la station répéteur.

**32.** Un procédé selon l'une quelconque des revendications 24 à 31, comprenant en outre l'étape consistant à amplifier et à réémettre les signaux portant de l'information et reçus à ladite station de réception (1-a), pour la réception par d'autres stations de réception.

**33.** Un procédé selon l'une quelconque des revendications 24 à 32, dans lequel ladite étape d'émission est susceptible de fonctionner pour émettre des données sur des composantes horizontale et verticale dudit signal hyperfréquence.

FIG.1

FIG.2

EP 0 995 279 B1

*FIG.3*

FIG.4

EP 0 995 279 B1

## FIG.5

## FIG.6

EP 0 995 279 B1

*FIG.7*

*FIG.8*

EP 0 995 279 B1

## FIG. 9

FIG.10

25 MHz

$\frac{1}{T_s}$

$f_0$ $f_1$ $f_2$ $f_3$ $f_4$ $f_5$ $f_6$ $f_7$ $f_8$ — — — — — $f_{997}$ $f_{998}$ $f_{999}$   FREQUENCY

EP 0 995 279 B1

*FIG.11*

EP 0 995 279 B1